# EUROPÄISCHE PATENTANMELDUNG

(11) **EP 3 581 737 A1**
(43) Veröffentlichungstag der Anmeldung: **18.12.2019**
(21) Anmeldenummer: 19179848.7
(22) Anmeldetag: 13.06.2019
(51) Int. Cl.: E04H 12/08, E04H 12/24, H02G 7/20, E04H 12/10

(54) **VORRICHTUNG ZUM HALTEN UND HERABFÜHREN VON LEITERSEILEN EINER FREILEITUNG**

(30) Priorität: 15.06.2018 DE 102018114357
(71) Anmelder: LTB Leitungsbau GmbH, 01445 Radebeul (DE)
(72) Erfinder: Käufl, Dipl.-Ing. Michael, 68766 Hockenheim (DE); Salewski, Dr.-Ing. Johannes, 67346 Speyer (DE)
(74) Vertreter: Sperling, Thomas

(57) **Zusammenfassung**

Die Erfindung betrifft eine Vorrichtung (1) zum Halten und Herabführen von Leiterseilen (6) einer Freileitung, insbesondere einen Kabelendmast. Die Vorrichtung (1) weist einen Mastschaft (2) mit an dem Mastschaft (2) in unterschiedlichen, horizontal ausgerichteten Traversenebenen (3a, 3b, 3c) angeordneten und starr mit dem Mastschaft (2) verbundenen Traversen (4a, 4b, 4c) zum Führen der in einer horizontalen Leiterseilrichtung (7) ausgerichteten Leiterseile (6) in jeweils mit den Traversen (4a, 4b, 4c) verbundenen Aufnahmeelementen (8) auf. Der Mastschaft (2) ist in einer in vertikaler Richtung ausgerichteten Achse (5) angeordnet. Die Traversen (4a, 4b, 4c) sind in jeweils voneinander abweichenden horizontalen Richtungen ausgerichtet, vom Mastschaft (2) abragend angeordnet. Dabei sind Traversen (4a, 4b, 4c) derart um einen Azimutalwinkel zur horizontalen Leiterseilrichtung (7) verschwenkt angeordnet, dass jeweils eine vertikal ausgerichtete, durch einen Aufhängungspunkt des Aufnahmeelements (8) an der Traverse (4a, 4b, 4c) verlaufende Gerade beabstandet zu den von der Traverse (4a, 4b, 4c) der Anordnung des jeweiligen Aufnahmeelements (8) abweichenden Traversen (4a, 4b, 4c) angeordnet ist.

## Beschreibung

Die Erfindung betrifft eine Vorrichtung zum Halten und Herabführen von Leiterseilen einer Freileitung, insbesondere für Hochspannung. Die Vorrichtung weist einen Mastschaft mit an dem Mastschaft in unterschiedlichen horizontal ausgerichteten Traversenebenen angeordneten und starr mit dem Mastschaft verbundenen Traversen zum Führen der in einer horizontalen Leiterseilrichtung ausgerichteten Leiterseilen in jeweils mit den Traversen verbundenen Aufnahmeelementen auf. Der Mastschaft ist in einer in vertikaler Richtung ausgerichteten Achse angeordnet. Die Traversen sind in jeweils voneinander abweichenden horizontalen Richtungen vom Mastschaft abragend ausgerichtet.

Als Freileitung wird herkömmlich die Gesamtheit einer Anlage zum oberirdischen Übertragen von elektrischer Energie verstanden. Die Anlage weist dabei Stützpunkte und Leitungsteile auf. Maste sind als Elemente der Stützpunkte jeweils mit einem in vertikaler Richtung ausgerichteten Mastschaft sowie Erdseilstützen und Querträgern, auch als Traversen bezeichnet, ausgebildet. Die Traversen sind als überwiegend in einer horizontalen Richtung auskragende Elemente über starre Verbindungen am Mastschaft befestigt. An den Traversen sind wiederum über insbesondere kettenförmige Isolatoren Leiterseile als elektrische Leiter angeordnet.

Masten von Freileitungen, insbesondere von Hochspannungsfreileitungen, werden nach Funktionalität und Bauform unterschieden. Neben Tragmasten zum Tragen und Abstützen der Leiterseile von Freileitungen werden Abspannmasten eingesetzt, um von den Leiterseilen erzeugte mechanische Kräfte, insbesondere Zugkräfte, aufzunehmen. In einer ersten Einsatzform eines Abspannmastes sind an einer ersten Seite des Abspannmastes Enden der Leiterseile angeordnet, wobei die Leiterseile auf einer zweiten Seite des Mastes mit einem neuen Abschnitt fortgeführt werden. In einer zweiten Einsatzform eines Abspannmastes werden die von den Isolatoren gehaltenen Leiterseile von einer im Wesentlichen horizontal ausgerichteten Leiterseilrichtung in eine von der horizontalen Richtung abweichenden Richtung nach unten zu Transformatoren beziehungsweise Schaltanlagen oder Übergängen zu Erdkabeln umgelenkt oder beispielsweise über ein Erdkabel nach unten weitergeführt. Kabelendmaste werden dabei als eine besondere Form eines Abspannmastes eingesetzt. Physikalisch vorgegebene und einzuhaltende Mindestabstände zwischen den Leiterseilen einzelner Phasen machen, insbesondere bei Spannungen von mehr als 50 kV, den Einsatz spezieller Vorrichtungen, wie sogenannter Kabelgärten, notwendig.

Für das vertikale Herabführen der Leiterseile von Hochspannungsfreileitungsmasten, insbesondere von Kabelendmasten, zu Schaltanlagen oder Kabelanlagen werden die Leiterseile in Leiterseilrichtung vor oder in vertikaler Richtung des Mastschaftes unter den Traversen nach unten zu Endverschlüssen geführt, welche sich auf separaten Stützen oder auf einer ebenfalls am Mast angeordneten Kabeltraverse befinden. Endverschlüsse dienen dem Verschließen eines freiliegenden Endes eines isolierten Leiters, an welchem eine elektrisch leitende Verbindung zu einem Leiterseil einer Freileitung hergestellt ist. Der isolierte Leiter kann dabei als Kabel oder auch als gasisolierter Leiter, kurz als GIL bezeichnet, ausgebildet sein. Im Falle des Einsatzes eines Kabels wird der Endverschluss auch als Kabelendverschluss bezeichnet.

Zum Übertragen elektrischer Leistung über große Strecken werden herkömmlich Drehstromsysteme mit drei unterschiedlichen Phasen beziehungsweise Drehstromkreise genutzt. Dabei liegt in jeweils drei Leiterseilen eine sinusförmig modulierte Wechselspannung gleicher Frequenz um einen Phasenwinkel von 120° verschoben an. Einfachleiter oder Bündelleiter gleichen Potentials werden als Phasen bezeichnet. Drei derartige Phasen werden in Relation zueinander geführt und bilden ein System, wobei Freileitungen häufig mehrere Systeme aufweisen.

Bei Freileitungen wird zwischen Systemen mit Wechselstromübertragung und mit Gleichstromübertragung unterschieden. Wechselstromübertragungssysteme sind dabei zumeist aus Drehstromkreisen mit drei Leiterseilen ausgebildet, bei welchen die Wechselspannungen jeweils um 120° phasenverschoben anliegen. Gleichstromübertragungssysteme sind zur Hochspannungs-GleichstromÜbertragung, kurz als HGÜ bezeichnet, aus Gleichstromkreisen ausgebildet. Freileitungen, welche sowohl aus einem Drehstromkreis oder mehreren Drehstromkreisen als auch aus einem Gleichstromkreis oder mehreren Gleichstromkreisen ausgebildet sind, werden als Hybridleitungen bezeichnet. Eine gasisolierte Leitung beziehungsweise Rohrleitung, kurz als GIL bezeichnet, kann zum oberirdischen oder unterirdischen Übertragen von elektrischer Energie genutzt werden.

Von einem Endmast einer Freileitung werden die Leiterseile der Systeme zu einem Portal und zu Kabelendverschlüssen geführt. Auch im Zuge des Netzausbaus und der Erneuerung von 380 kV-Schaltanlagen müssen Leiterseile an Endmasten in vertikaler Richtung herabgeführt werden, um mit Kabeln oder gasisolierten Leitern verbunden zu werden. Dabei ist die räumliche Situation zumeist derart beengt, dass eine konventionelle Kabelübergangsanlage mit Endmast und Portal nicht in Frage kommt. Zum Herabführen der Leiterseile der Freileitungen in vertikaler Richtung ist ein ausreichender Abstand der Leiterseile einzelner Phasen zueinander zwingend notwendig, um die Funktionalität zu gewährleisten und Störungen zu vermeiden. Dabei sind insbesondere bei Freileitungen mit anliegenden Höchstspannungen von mindestens 380 kV sehr große Abstände zwischen den einzelnen Leiterseilen der unterschiedlichen Phasen erforderlich. Der mit den großen Abständen zwischen den Leiterseilen erforderliche hohe Platzbedarf der Anlage verlangt sehr große Flächen, welche oftmals nur unter einem hohen Aufwand zu realisieren sind.

Für das Herabführen der Leiterseile der einzelnen Phasen in vertikaler Richtung ist die Anordnung der Leiterseile zueinander relevant. So sind aus dem Stand der Technik beispielsweise Einebenenanordnungen bekannt, bei welchen die Leiterseile sämtlicher Phasen auf sogenannten Einebenenmasten in einer horizontalen Ebene, lateral ausreichend beabstandet zueinander angeordnet sind. Damit ist das Herabführen der Leiterseile in vertikaler Richtung einfach zu realisieren. Zudem werden bei der Einebenenanordnung der Leiterseile herkömmlich nicht mehr als zwei Systeme geführt.

Alternativ ausgebildete Freileitungen mit sogenannten Donaumasten weisen zwei Systeme auf. Die Donaumasten sind jeweils mit zwei Traversen einer oberen Traversenebene und zwei Traversen einer unter Traversenebene ausgebildet. Die Traversenebenen sind in vertikaler Richtung beabstandet zueinander und in einer gemeinsamen horizontalen Richtung, parallel zueinander angeordnet. Dabei werden jeweils die Leiterseile einer ersten Phase der zwei Systeme auf den Traversen der oberen Traversenebene und die Leiterseile der zweiten und der dritten Phase in horizontaler Richtung beabstandet zueinander auf den Traversen der unteren Traversenebene geführt. Beim Herabführen der Leiterseile in vertikaler Richtung sind die Leiterseile der ersten Phase folglich von der oberen Traversenebene an den Leiterseilen der unteren Traversenebene vorbei und zwischen den Leiterseilen der unteren Traversenebene hindurchzuführen. Obwohl die lateralen, horizontalen Abstände der Leiterseile der einzelnen Phasen bei der Ausbildung der Freileitung mit Donaumasten geringer sind als bei Einebenenanordnungen, ist das Herabführen der Leiterseile im Bereich von Endmasten einfach zu gewährleisten.

Aus dem Stand der Technik sind neben den Mastformen der Einebenenanordnung und der Donaumasten auch Mastformen bekannt, bei welchen drei Traversen in einer Draufsicht sternförmig vom Mastschaft abragend und dabei weder auf einer gemeinsamen horizontalen Linie noch in vertikaler Richtung beabstandet zueinander angeordnet sind. Eine derartige Mastform stellt der sogenannte Mercedesmast dar. Beim Einsatz von Mercedesmasten wird eine Leitung in Form eines Leiterseils in zwei Leitungen, das heißt in zwei Leiterseile verzweigend, aufgeteilt.

Bei Freileitungsmasten mit vier oder mehr Systemen, wie einem sogenannten Tannenmast oder Doppeltonnenmast, wird das Herabführen der Leiterseile in vertikaler Richtung sehr schwierig. Beim Tannenmast und beim Doppeltonnenmast sind die Traversen jeweils in drei unterschiedlichen horizontalen Traversenebenen in vertikaler Richtung beabstandet zueinander angeordnet. Beim Tannenmast sind die Leiterseile von zwei Systemen auf den beiden oberen Traversenebenen, ähnlich der Donaumastanordnung, angeordnet, während die Leiterseile der zwei weiteren Systeme auf der unteren Ebene in einer Einebenenanordnung geführt sind. Die Traversen der unteren Traversenebene weisen die größte Ausdehnung auf, während die Traversen der oberen Traversenebenen mit geringeren Ausdehnungen als die Traversen der unteren Traversenebene ausgebildet sind. Beim Doppeltonnenmast, welcher insbesondere bei vier-systemigen 380-kV-Leitungen das Regelgestänge bildet, sind jeweils die Leiterseile von drei Phasen jedes Systems an den Traversen gehalten, sodass in jeder Traversenebene vier Leiterseile angeordnet sind. Die Doppeltonnenmasten sind jeweils mit einer oberen, einer mittleren und einer unteren Traversenebene ausgebildet, welche in vertikaler Richtung jeweils beabstandet zueinander und in einer gemeinsamen horizontalen Richtung, parallel zueinander angeordnet sind.

Herkömmlich sind ebenso Mastformationen aus sogenannten Abzweigmasten bekannt, bei welchen die Leiterseile beispielsweise von einer Donaumastanordnung auf eine Einebenenanordnung geführt werden. Derartig ausgebildete Abzweigmaste weisen in der horizontalen Ebene sowohl senkrecht zur Leiterseilrichtung als auch in Leiterseilrichtung ausgerichtet angeordnete Traversen auf, welche auch als Kreuztraversen bezeichnet werden. Eine bestimmte Anzahl der Leiterseile wird über die Kreuztraversen geführt, wobei in Leiterseilrichtung gegebenenfalls Kabelabgangstraversen zum Verbinden der Leiterseile erforderlich sind.

Die aus dem Stand der Technik bekannten Mastformationen weisen einen sehr großen Platzbedarf zum Herabführen der Leiterseile der Freileitung zu in vertikaler Richtung unterhalb der Leiterseile angeordneten Transformatoren beziehungsweise Schaltanlagen oder Übergängen zu Erdkabeln mit Kabelendverschlüssen, insbesondere bei Höchstspannungsleitungen mit mehr als zwei Systemen, auf.

Die Aufgabe der Erfindung besteht im Bereitstellen eines Kabelendmastes als Übergang der im Wesentlichen in horizontaler Richtung geführten Leiterseile einer Freileitung zu in vertikaler Richtung unterhalb der Leiterseile angeordneten Einheiten, wie Transformatoren beziehungsweise Schaltanlagen oder Übergängen zu Erdkabeln mit Kabelendverschlüssen oder gasisolierten Leitungen. Der Kabelendmast, insbesondere für Freileitungen zum Übertragen elektrischer Energie bei Höchstspannungen, mit Hybridleitungen und mindestens zwei Stromkreisen, soll einen minimalen Platzbedarf aufweisen sowie konstruktiv einfach und damit kostengünstig herzustellen sein.

Die Aufgabe wird durch den Gegenstand mit den Merkmalen des selbstständigen Patentanspruchs 1 gelöst. Weiterbildungen sind in den abhängigen Patentansprüchen angegeben.

Die Aufgabe wird durch eine Vorrichtung zum Halten und Herabführen von Leiterseilen einer Freileitung, insbesondere einen Kabelendmast, gelöst. Die Vorrichtung weist einen Mastschaft mit an dem Mastschaft in unterschiedlichen, horizontal ausgerichteten Traversenebenen angeordneten und starr mit dem Mastschaft verbundenen Traversen zum Führen der in einer horizontalen Leiterseilrichtung ausgerichteten Leiterseile in jeweils mit den Traversen verbundenen Aufnahmeelementen auf. Dabei ist der Mastschaft in einer in vertikaler Richtung ausgerichteten Achse angeordnet. Die Traversen sind in jeweils voneinander abweichenden horizontalen Richtungen vom Mastschaft abragend ausgerichtet.

Nach der Konzeption der Erfindung sind die Traversen derart in einem Azimutalwinkel zur horizontalen Leiterseilrichtung verschwenkt angeordnet, dass jeweils eine vertikal ausgerichtete, durch einen Aufhängungspunkt des Aufnahmeelements an der Traverse verlaufende Gerade beabstandet zu den von der Traverse mit der Anordnung des jeweiligen Aufnahmeelements abweichenden Traversen angeordnet ist, sodass vorteilhaft von jeder Traverse der als ein Kabelendmast ausgebildeten Vorrichtung Leiterseile oder Kabel im Wesentlichen in vertikaler Richtung direkt nach unten herabgeführt werden können, ohne dabei um andere Traversen herumgeführt zu werden.

Unter dem Azimutwinkel wird ein Horizontalwinkel beziehungsweise ein Winkel in einer horizontalen Ebene verstanden.

Ein besonderer Vorteil der Erfindung besteht darin, dass jede vertikal ausgerichtete, durch einen Aufhängungspunkt eines Aufnahmeelements an einer Traverse verlaufende Gerade beabstandet zu den von der Traverse der Anordnung des jeweiligen Aufnahmeelements abweichenden Traversen angeordnet ist, sodass keine vertikal ausgerichtete, durch einen Aufhängungspunkt eines Aufnahmeelements an der Traverse verlaufende Gerade durch eine von der Traverse der Anordnung des jeweiligen Aufnahmeelements abweichende Traverse verläuft.

Nach einer Weiterbildung der Erfindung sind die Traversen jeweils paarweise am Mastschaft angeordnet. Die paarweise angeordneten Traversen sind vorteilhaft jeweils in einer gemeinsamen Traversenebene, insbesondere symmetrisch zum Mastschaft, ausgerichtet. Die Symmetrieebene ist dabei durch die Richtung der Achse des Mastschaftes und die horizontale Leiterseilrichtung aufgespannt.

Nach einer bevorzugten Ausgestaltung der Erfindung sind mindestens zwei Traversenebenen, insbesondere drei oder vier Traversenebenen, ausgebildet.

Die Traversen einer ersten, in vertikaler Richtung oberen Traversenebene sind vorteilhaft jeweils in einem Winkel β im Bereich größer als 90° und kleiner als 180° zur horizontalen Leiterseilrichtung ausgerichtet. Dabei sind die Traversen der ersten Traversenebene vorzugsweise jeweils in einem Winkel β im Bereich von 120° bis 150°, insbesondere in einem Winkel von 135°, zur horizontalen Leiterseilrichtung angeordnet.

Die Traversen einer zweiten, in vertikaler Richtung mittleren Traversenebene sind vorteilhaft jeweils in einem Winkel α von 90° zur horizontalen Leiterseilrichtung, gemeinsam einen Winkel von 180° einschließend angeordnet.

Die Traversen einer dritten, in vertikaler Richtung unteren Traversenebene sind vorteilhaft jeweils in einem Winkel γ im Bereich größer als 0° und kleiner als 90° zur horizontalen Leiterseilrichtung ausgerichtet. Dabei sind die Traversen der dritten Traversenebene vorzugsweise jeweils in einem Winkel γ im Bereich von 30° bis 60°, insbesondere in einem Winkel von 45°, zur horizontalen Leiterseilrichtung angeordnet.

Damit sind die Traversen einer möglichen Ausgestaltung der Erfindung einer ersten Traversenebene um einen stumpfen Azimutalwinkel, die Traversen einer zweiten Traversenebene um einen rechten Azimutalwinkel und die Traversen einer dritten Traversenebene um einen spitzen Azimutalwinkel zur horizontalen Leiterseilrichtung verschwenkt. Der Azimutwinkel nimmt dabei vorteilhaft von der oberen zur unteren Traversenebene ab. Die Traversen der unteren Traversenebene sind folglich von der im Stand der Technik üblichen senkrechten Ausrichtung zu den Leiterseilen in der horizontalen Ebene entgegen der Richtung der ankommenden Leiterseile verschwenkt. Die in der unteren Traversenebene gehaltenen Leiterseile werden damit ausgehend von der Leiterseilrichtung der ankommenden Leiterseile zuerst aufgenommen. Die Traversen der oberen Traversenebene sind von der im Stand der Technik üblichen senkrechten Ausrichtung zu den Leiterseilen in der horizontalen Ebene in der Richtung der ankommenden Leiterseile verschwenkt, sodass die in der oberen Traversenebene gehaltenen Leiterseile abschließend aufgenommen werden.

Mit der erfindungsgemäßen Anordnung der Traversen am Mastschaft und der Anordnung der Aufnahmeelemente zur Aufnahme der Leiterseile an den Traversen ist es möglich, die Leiterseile vom Aufnahmeelement ausgehend vertikal nach unten herabzuführen. Dabei werden die Leiterseile derart an den Traversen aufgenommen, dass jeweils eine direkte Verbindung vom Aufnahmeelement vertikal nach unten nicht durch andere Traversen unterbrochen ist.

Eine von einem Aufnahmeelement der Vorrichtung vertikal nach unten, beispielsweise zum Boden, verlaufende gerade Linie tangiert oder schneidet folglich keine in der vertikalen Richtung unterhalb des Aufnahmeelements angeordneten Traversen oder Leiterseile.

Zudem sind die Aufnahmeelemente so horizontal derart beabstandet zueinander angeordnet, dass vorgegebene elektrische Abstände gewährleistet sind. Dabei sind die Traversen in einer vorteilhaften Ausgestaltung der Erfindung derart zur horizontalen Leiterseilrichtung und zueinander verschwenkt angeordnet, dass zwischen benachbarten Traversen ein horizontaler Mindestwinkel ausgebildet ist. Damit werden horizontale Mindestabstände zwischen den Aufnahmeelementen und folglich den Leiterseilen gewährleistet. Die Azimutalwinkel zwischen zwei benachbarten Traversen der Vorrichtung betragen mindestens 15°, insbesondere mindestens 20°, speziell mindestens 30°.

Ein besonderer Vorteil der Erfindung besteht darin, die Traversen der Vorrichtung jeweils in einem Azimutwinkel zur horizontalen Leiterseilrichtung derart verschwenkt und die Aufnahmeelemente derart anzuordnen, dass jedes Leiterseil von einem benachbarten Tragmast aus direkt zu einem Aufnahmeelement führbar ist, ohne zusätzliche Kabeltraversen zwischen Aufnahmeelementen vorsehen zu müssen. Dabei ist die Vorrichtung ausschließlich mit Traversen ausgebildet, welche aus der Leiterseilrichtung verschwenkt ausgerichtet sind.

Die Vorrichtung mit drei unterschiedlichen Traversenebenen und jeweils zwei Traversen pro Traversenebene wird vorzugsweise für Freileitungen mit vier Systemen genutzt.

Nach einer alternativen Ausgestaltung der Erfindung sind zusätzliche Traversen, insbesondere zwei zusätzliche Traversen, mit Aufnahmeelementen vorgesehen, welche in Leiterseilrichtung beziehungsweise entgegen der Leiterseilrichtung ausgerichtet angeordnet sind. Eine derart ausgebildete Vorrichtung wird bevorzugt für Freileitungen mit sechs Systemen verwendet. Bei einer vorteilhaften Ausgestaltung der Erfindung mit vier Systemen sind die Traversen der Vorrichtung in sechs unterschiedlichen Richtungen und bei einer vorteilhaften Ausgestaltung der Erfindung mit sechs Systemen sind die Traversen der Vorrichtung in acht unterschiedlichen Richtungen ausgerichtet. Dabei sind jeweils vorzugsweise zwei Traversen in entgegengesetzten Richtungen zueinander angeordnet. Zudem werden bevorzugt jeweils Leiterseile zweier Phasen in den Aufnahmeelementen einer Traverse aufgenommen.

Die Vorrichtung ist vorteilhaft symmetrisch zu einer Ebene ausgebildet, welche durch die Achse des Mastschaftes und die Leiterseilrichtung aufgespannt ist.

Nach einer vorteilhaften Ausgestaltung der Erfindung weist jede Traverse mindestens ein Aufnahmeelement, insbesondere mindestens ein Aufnahmeelement oder mindestens zwei Aufnahmeelemente, auf. Die Aufnahmeelemente einer Traversenebene sind vorzugsweise in einer gemeinsamen horizontalen Ebene angeordnet und weisen folglich keinen vertikalen Abstand zueinander auf.

Ein besonderer Vorteil besteht darin, wenn die Aufnahmeelemente als Isolatoren zwischen einer Traverse und einem Leiterseil ausgebildet sind.

Es wird eine Vorrichtung zum Halten und Herabführen von Leiterseilen einer Freileitung, insbesondere ein Kabelendmast, zur Verfügung gestellt, bei welchem von jeder Traverse einzelne Leiterseile im Wesentlichen in vertikaler Richtung nach unten abführbar sind, wobei Sicherheitsabstände zu anderen Bauteilen eingehalten werden. Die um die vertikal ausgerichtete Achse des Mastschaftes verschwenkt zueinander angeordneten Traversen ermöglichen derart zueinander versetzt angeordnete Aufnahmeelemente der Leiterseile, dass beim Herabführen der einzelnen Leiterseile zum Einhalten eines Abstandes zu in vertikaler Richtung unterhalb angeordneten Traversen auf eine spezielle und aufwändige Führung der einzelnen Leiterseile, welche vom direkten Herabführen in der vertikalen Richtung abweicht, verzichtet wird. Der Abstand zwischen den einzelnen Leiterseilen sowie zwischen den Leiterseilen und den Traversen wird mit der verschwenkten Anordnung der Traversen erreicht.

Der erfindungsgemäße Kabelendmast weist zusammenfassend diverse Vorteile auf:
- minimaler Platzbedarf für die Übergänge der Leiterseile von Freileitungen auf beispielsweise Transformatoren beziehungsweise Schaltanlagen oder Übergänge zu Erdkabeln,
- damit auch deutlich reduzierte Inanspruchnahme von Fläche und kostengünstigeres Betreiben der Freileitung.

Weitere Einzelheiten, Merkmale und Vorteile von Ausgestaltungen der Erfindung ergeben sich aus der nachfolgenden Beschreibung von Ausführungsbeispielen mit Bezugnahme auf die zugehörigen Zeichnungen. Es zeigen jeweils eine als ein Kabelendmast einer Freileitung mit drei Traversenebenen und geführten Leiterseilen ausgebildete Vorrichtung zum Tragen der Leiterseile:
- Fig. 1:: in einer Vorderansicht, insbesondere aus einer Richtung horizontal angeordneter Leiterseile,
- Fig. 2:: in einer Draufsicht (Sternmast),
- Fig. 3:: in einer seitlichen Ansicht, insbesondere aus einer Richtung senkrecht zur Richtung der horizontal angeordneten Leiterseile und
- Fig. 4:: in einer perspektivischen Ansicht.

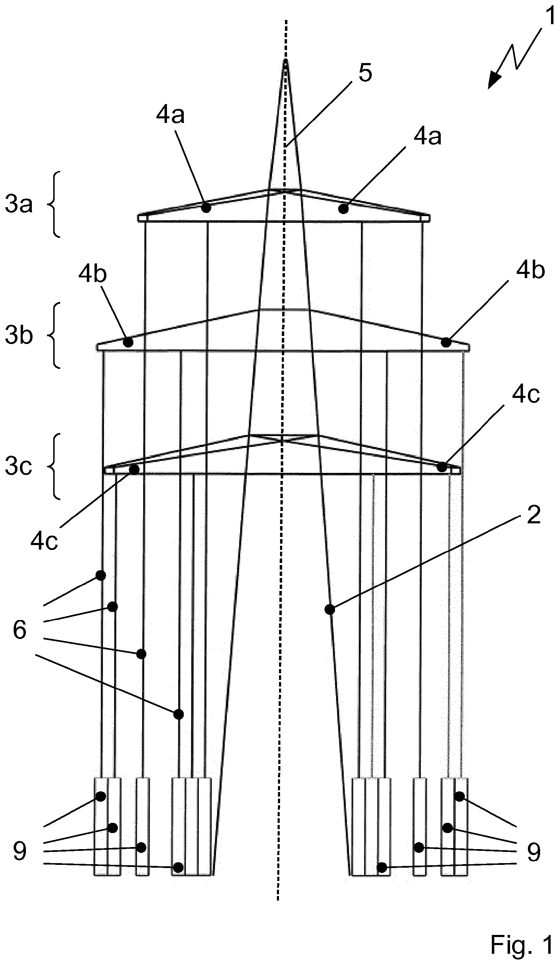

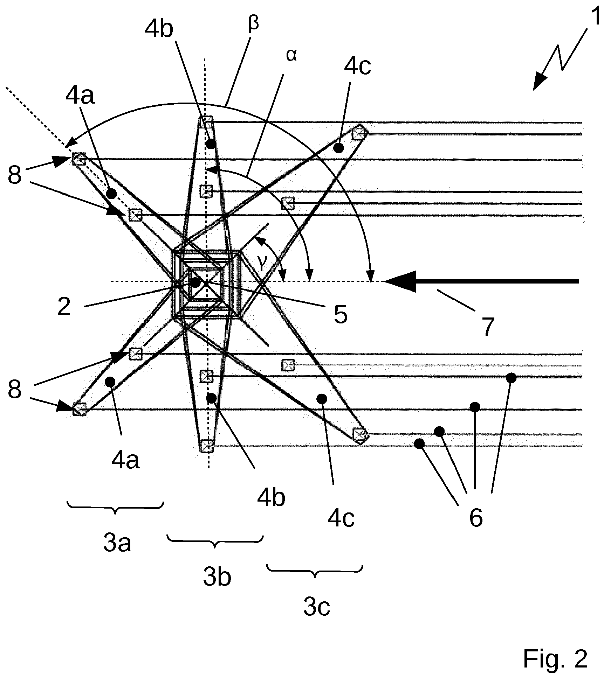

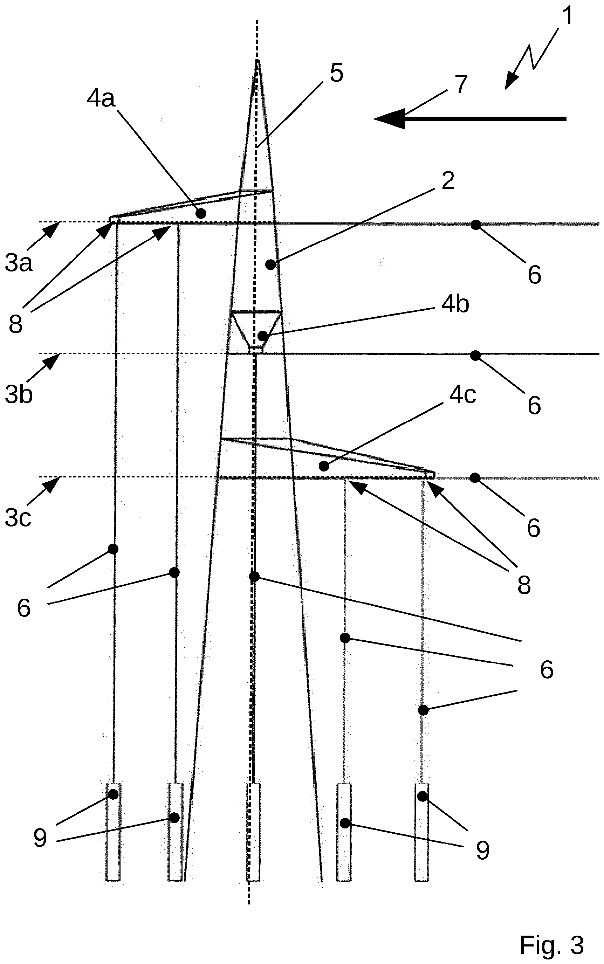

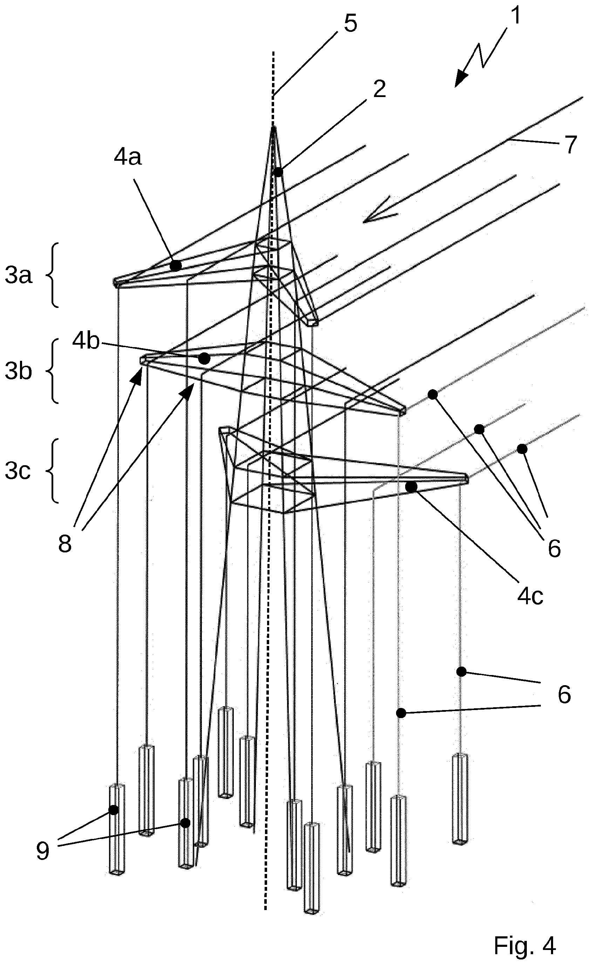

In den **Fig. 1 bis 4** sind jeweils eine als ein Kabelendmast beziehungsweise als ein Freileitungsmast einer Freileitung, insbesondere mit vier Systemen, ausgebildete Vorrichtung 1 zum Tragen von Leiterseilen 6 dargestellt, welche einen Mastschaft 2 sowie mehrere in unterschiedlichen Traversenebenen 3a, 3b, 3c angeordnete Traversen 4a, 4b, 4c aufweist. Dabei werden in Fig. 1 eine Vorderansicht, in Fig. 2 eine Draufsicht, in Fig. 3 eine Seitenansicht und in Fig. 4 eine perspektivische Darstellung der Vorrichtung 1 gezeigt.

Die Traversen 4a, 4b, 4c sind in drei Traversenebenen 3a, 3b und 3c angeordnet. Dabei sind jeweils zwei Traversen 4a, 4b, 4c in einer gemeinsamen ersten Traversenebene 3a, einer zweiten Traversenebene 3b und einer dritten Traversenebene 3c starr mit dem Mastschaft 2 verbunden. Die starre Verbindung der Traversen 4a, 4b, 4c kann sowohl durch Schraubverbindungen als auch durch Nietverbindungen oder durch Schweißen hergestellt sein. Die Traversen 4a, 4b, 4c sind orthogonal zu einer in vertikaler Richtung angeordneten Achse 5 des Mastschaftes 2 und damit jeweils in einer horizontalen Richtung ausgerichtet.

An den Traversen 4a, 4b, 4c des Kabelendmastes 1 gehaltene und im Wesentlichen in horizontaler Richtung verlaufende Leiterseile 6 der Freileitung werden im Bereich des Kabelendmastes 1 in der Richtung umgelenkt und in einer im Wesentlichen vertikalen Richtung herabgeführt. Dabei sind an jeder Traverse 4a, 4b, 4c zwei Leiterseile 6 befestigt. Nach einer alternativen Ausführungsform können die Leiterseile 6 an den Traversen 4a, 4b, 4c enden und über Kabel herabgeführt beispielsweise mit Transformatoren beziehungsweise Schaltanlagen oder Übergängen zu Erdkabeln verbunden sein.

Die zwei Traversen 4b der zweiten, mittleren Traversenebene 3b sind in einer der Achse 5 des Mastschaftes 2 entsprechenden Richtung und einer orthogonal zur horizontalen Leiterseilrichtung 7 verlaufenden, horizontalen Richtung aufgespannten Ebene, in zwei entgegengesetzt zueinander, orthogonal zur Leiterseilrichtung 7 damit einen Winkel von 180° einschließenden Richtungen ausgerichtet am Mastschaft 2 angeordnet. Die zweiten Traversen 3b sind damit jeweils in einem Winkel α von 90° zur horizontalen Leiterseilrichtung 7 und einem Winkel von 2α zueinander angeordnet, was insbesondere aus Fig. 2 und Fig. 4 hervorgeht.

Die Traversen 4a der ersten, oberen Traversenebene 3a sowie die Traversen 4c der dritten, unteren Traversenebene 3c sind jeweils aus der aus der der Achse 5 des Mastschaftes 2 entsprechenden Richtung und der orthogonal zur horizontalen Leiterseilrichtung 7 horizontal verlaufenden Richtung aufgespannten Ebene herausragend angeordnet. Dabei sind die ersten Traversen 3a jeweils in einem Winkel β größer als 90°, insbesondere im Bereich von 120° bis 150°, zur horizontalen Leiterseilrichtung 7 und einem Winkel von 2β zueinander angeordnet, während die dritten Traversen 3c jeweils in einem Winkel γ kleiner als 90°, insbesondere in einem Bereich von 30° bis 60°, zur horizontalen Leiterseilrichtung 7 und einem Winkel von 2γ zueinander angeordnet sind. Die Winkel α, β und γ beziehen sich jeweils auf die horizontale Leiterseilrichtung 7 der ankommenenden Leiterseile 6. Damit sind die Traversen 4a der oberen Traversenebene 3a in Leiterseilrichtung 7 der ankommenenden Leiterseile 6 um die Achse 5 des Mastschaftes 2 aus der aus der der Achse 5 entsprechenden Richtung und der orthogonal zur horizontalen Leiterseilrichtung 7 horizontal verlaufenden Richtung aufgespannten Ebene heraus verschwenkt ausgerichtet, während die Traversen 4c der unteren Traversenebene 3c entgegen der Leiterseilrichtung 7 der ankommenenden Leiterseile 6 um die Achse 5 des Mastschaftes 2 aus der aus der der Achse 5 entsprechenden Richtung und der orthogonal zur horizontalen Leiterseilrichtung 7 horizontal verlaufenden Richtung aufgespannten Ebene heraus verschwenkt ausgerichtet sind.

Mit der um die Achse 5 des Mastschaftes 2 in Bezug auf die der Achse 5 entsprechenden Richtung und die orthogonal zur horizontalen Leiterseilrichtung 7 horizontal verlaufenden Richtung aufgespannten Ebene verschwenkten Anordnungen der oberen Traversen 4a und der unteren Traversen 4c wird ein ungestörtes Herabführen der Leiterseile 6 in im Wesentlichen vertikaler Richtung nach unten gewährleistet, da die einzelnen, in vertikaler Richtung übereinander angeordneten Traversen 4a, 4b, 4c nicht in einer gemeinsamen vertikalen Ebene ausgerichtet sind. Dabei wird das Herabführen der an in vertikaler Richtung übereinander angeordneten Traversen 4a, 4b, 4c gehaltenen Leiterseile 6 gegenseitig nicht gestört.

Aus der Leiterseilrichtung 7 der ankommenden Leiterseile 6 betrachtet werden folglich zunächst die an den unteren Traversen 4c der unteren Traversenebene 3c gehaltenen Leiterseile 6, anschließend die an den mittleren Traversen 4b der mittleren Traversenebene 3b gehaltenen Leiterseile 6 und letztlich die an den oberen Traversen 4a der oberen Traversenebene 3a gehaltenen Leiterseile 6 herabgeführt. Eine derartige Anordnung der Traversen 4a, 4b, 4c ermöglicht ein geradliniges und einfaches Herabführen der Leiterseile 6, ohne die Leiterseile 6 um in vertikaler Richtung jeweils unterhalb angeordnete Traversen 4b, 4c herumzuführen. Zudem werden mit der Anordnung der oberen Traversen 4a in einem eingeschlossenen Winkel von 360°- 2β und der unteren Traversen 4c in einem eingeschlossenen Winkel 2γ ausreichende horizontale Sicherheitsabstände zwischen den in vertikaler Richtung von den Traversen 4a, 4b, 4c herabgeführten Leiterseile 6 gewährleistet.

Wie insbesondere in der Draufsicht des Kabelendmastes 1 nach Fig. 2 dargestellt ist, sind die Traversen 4a, 4b, 4c sternförmig zueinander an dem Mastschaft 2 angeordnet, sodass ein derartiger Kabelendmast 1 auch als sternförmiger Kabelendmast 1, insbesondere als einfacher Sternmast bezeichnet wird. Da die aus der in der Achse 5 des Mastschaftes 2 entsprechenden Richtung und einer orthogonal zur horizontalen Leiterseilrichtung 7 horizontal verlaufenden Richtung aufgespannten Ebene herausgeschwenkt angeordneten oberen Traversen 4a und unteren Traversen 4c in vertikaler Richtung nicht übereinander und auch nicht in der Ebene der mittleren Traversen 4b angeordnet sind, sind folglich alle Traversen 4a, 4b, 4c von der Achse 5 des Mastschaftes 2 ausgehend in unterschiedlichen Richtungen ausgerichtet. Jede Richtung einer Traverse 4a, 4b, 4c erstreckt sich dabei von einem ersten Ende der Traverse 4a, 4b, 4c an der Achse 5 des Mastschaftes 2 entlang einer Geraden zu einem dem ersten Ende distal angeordneten zweiten Ende der Traverse 4a, 4b, 4c.

So sind die beiden in der unteren, dritten Traversenebene 3c angeordneten unteren Traversen 4c entgegen der Leiterseilrichtung 7 der ankommenden Leiterseile 6 jeweils in dem Winkel β zur Leiterseilrichtung 7 ausgerichtet. Die unteren Traversen 4c sind somit entgegen der Leiterseilrichtung 7 einen spitzen Winkel 2β beziehungsweise in der Leiterseilrichtung 7 einen stumpfen Winkel von 360° - 2γ einschließend angeordnet. Die über Aufnahmeelemente 8 an den dritten Traversen 4c gehaltenen Leiterseile 6 werden in Leiterseilrichtung 7 vor den Traversen 4a, 4b der oberen Traversenebene 3a und der mittleren Traversenebene 3b in vertikaler Richtung am Kabelendmast 1 herabgeführt, was insbesondere auch in den Fig. 3 und 4 gezeigt ist.

Die beiden in der mittleren, zweiten Traversenebene 4b, an zwei entgegengesetzten Seiten des Mastschaftes 2 angeordneten mittleren Traversen 3b sind in der horizontalen Ebene jeweils in einem rechten Winkel zur Leiterseilrichtung 7 ausgerichtet. Die über Aufnahmeelemente 8 an den zweiten Traversen 4b gehaltenen Leiterseile 6 werden in Leiterseilrichtung 7 nach den Traversen 4c der unteren Traversenebene 3c und vor den Traversen 4a der oberen Traversenebene 3a in vertikaler Richtung am Kabelendmast 1 herabgeführt. Die an den mittleren Traversen 4b herabgeführten Leiterseile 6 sind im Wesentlichen in der durch die Achse 5 des Mastschaftes 2 entsprechenden Richtung und der orthogonal zur horizontalen Leiterseilrichtung 7 horizontal verlaufenden Richtung aufgespannten Ebene angeordnet.

Die beiden in der oberen, ersten Traversenebene 3a angeordneten oberen Traversen 4a sind in der Leiterseilrichtung 7 der ankommenden Leiterseile 6 jeweils in dem Winkel γ zur Leiterseilrichtung 7 ausgerichtet. Die oberen Traversen 4a sind somit in der Leiterseilrichtung 7 einen stumpfen Winkel von 360° - 2γ beziehungsweise in der Leiterseilrichtung 7 einen spitzen Winkel 2γ einschließend angeordnet. Die über Aufnahmeelemente 8 an den ersten Traversen 4a gehaltenen Leiterseile 6 werden in Leiterseilrichtung 7 nach den Traversen 4b, 4c der unteren Traversenebene 3c und der mittleren Traversenebene 3b in vertikaler Richtung am Kabelendmast 1 herabgeführt. Die über die Aufnahmeelemente 8 an den Traversen 4a, 4b, 4c gehaltenen Leiterseile 6 werden jeweils in vertikaler Richtung an den benachbarten Traversen 4a, 4b, 4c vorbeigeführt.

Die aus der aus der der Achse 5 des Mastschaftes 2 entsprechenden Richtung und der orthogonal zur horizontalen Leiterseilrichtung 7 horizontal verlaufenden Richtung aufgespannten vertikalen Ebene herausragende Anordnung der Traversen 4a der ersten, oberen Traversenebene 3a sowie der Traversen 4c der dritten, unteren Traversenebene 3c in Kombination mit der Anordnung der Traversen 4b der zweiten, mittleren Traversenebene 3b innerhalb der Ebene gewährleistet, dass die Aufnahmeelemente 8 der Leiterseile 6 der unterschiedlichen Traversen 4a, 4b, 4c in horizontaler Richtung versetzt zueinander angeordnet sind. Damit sind die Leiterseile 6 derart an den Traversen 4a, 4b, 4c aufgenommen, dass eine direkte Verbindung zwischen einem Aufnahmeelement 8 in vertikaler Richtung nach unten zu Endverschlüssen 9 nicht durch unterhalb der entsprechenden Traverse 4a, 4b, 4c angeordnete Traversen 4b, 4c versperrt ist und die Leiterseile 6 um die Traversen 4b, 4c als Hindernisse herumzuführen sind. Insbesondere wird aus Fig. 3 deutlich, dass eine durch ein an einer Traverse 4a, 4b, 4c angeordnetes Aufnahmeelement 8 hindurchführende vertikal ausgerichtete Gerade als Darstellung eines Leiterseils 6 oder eines Kabels nicht durch eine unterhalb des Aufnahmeelements 8 angeordnete Traverse 4a, 4b, 4c verläuft. Die Endverschlüsse 9 sind insbesondere als Übergänge zu Erdkabeln ausgebildet, sind jedoch ebenso als Verbindungen zu Transformatoren beziehungsweise Schaltanlagen zu verstehen.

Mit der sternförmigen Anordnung der Traversen 4a, 4b, 4c sind zudem die Leiterseile 6 der unterschiedlichen Phasen ausreichend beabstandet zueinander angeordnet, sodass die vorgegebenen elektrischen Abstände gewährleistet sind.

Aus Sicht der Leiterseilrichtung 7 der ankommenden Leiterseile 6 werden die an den unteren Traversen 4c der dritten Traversenebene 3c angeordneten Leiterseile 6 zuerst in vertikaler Richtung nach unten zu den Endverschlüssen 9 umgelenkt. Anschließend werden die an den mittleren Traversen 4b der zweiten Traversenebene 3b aufgenommenen Leiterseile 6 sowie die an den oberen Traversen 4a der ersten Traversenebene 3a gehaltenen Leiterseile 6 in vertikaler Richtung nach unten zu den Endverschlüssen 9 jeweils in einem ausreichenden Abstand zu den benachbarten Traversen 4a, 4b, 4c an den Traversen 4a, 4b, 4c und daran angeordneten Leiterseilen 6 vorbei geführt.

Die Aufnahmeelemente 8 der Leiterseile 6 sind jeweils in vertikaler Richtung nach unten ausgerichtet und mit ersten Enden an Unterseiten der Traversen 4a, 4b, 4c des Kabelendmastes 1 angeordnet. Die Leiterseile 6 sind jeweils an zu den ersten Enden der Aufnahmeelemente 8 distal ausgebildeten zweiten Enden der Aufnahmeelemente 8 mit diesen verbunden. Die Aufnahmeelemente 8 dienen dabei als Isolatoren zwischen den Traversen 4a, 4b, 4c des Kabelendmastes 1 und den Leiterseilen 6.

In einer nicht dargestellten Ausführungsform einer Freileitung mit mindestens fünf Systemen wird ein Teil der Phasen der Systeme über an sogenannten Kreuztraversenmasten gehaltenen Leiterseilen geführt. Dabei sind bei einem derartigen Kabelendmast im Vergleich zum in den Fig. 1 bis 4 dargestellten Kabelendmast 1 insbesondere zwei zusätzliche Traversen jeweils in der horizontalen Leiterseilrichtung 7 ausgerichtet am Mastschaft befestigt, wobei eine Traverse in Leiterseilrichtung 7 und eine Traverse entgegen der Leiterseilrichtung 7 ausgerichtet ist. Die Leiterseile werden über an den zusätzlichen Traversen angeordnete Aufnahmeelemente gehalten und umgelenkt in vertikaler Richtung nach unten geführt.

Die Anordnung der Leiterseile an den zusätzlichen Traversen könnte Zwischenverbindungen über Kabel notwendig machen. Ein Kabelendmast einer Freileitung mit Kreuztraversenmasten weist neben den Traversen 4a, 4b, 4c der unterschiedlichen Traversenebenen 3a, 3b, 3c die zusätzlichen Traversen auf und wird auch als kompletter oder vollständiger Sternmast bezeichnet.

### Bezugszeichenliste

- 1: Vorrichtung, Kabelendmast
- 2: Mastschaft
- 3a: erste, obere Traversenebene
- 3b: zweite, mittlere Traversenebene
- 3c: dritte, untere Traversenebene
- 4a: obere Traverse, Traverse der ersten Traversenebene 3a
- 4b: mittlere Traverse, Traverse der zweiten Traversenebene 3b
- 4c: untere Traverse, Traverse der dritten Traversenebene 3c
- 5: Achse Mastschaft 2
- 6: Leiterseil
- 7: horizontale Leiterseilrichtung
- 8: Aufnahmeelement Leiterseil 6
- 9: Endverschluss

- α: Winkel Traversen 4b zweite Traversenebene 3b
- β: Winkel Traversen 4a erste Traversenebene 3a
- γ: Winkel Traversen 4c dritte Traversenebene 3c

## Patentansprüche

1. Vorrichtung (1) zum Halten von Leiterseilen (6) einer Freileitung, aufweisend einen Mastschaft (2) mit an dem Mastschaft (2) in unterschiedlichen, horizontal ausgerichteten Traversenebenen (3a, 3b, 3c) angeordneten und starr mit dem Mastschaft (2) verbundenen Traversen (4a, 4b, 4c) zum Führen der in einer horizontalen Leiterseilrichtung (7) ausgerichteten Leiterseile (6) in jeweils mit den Traversen (4a, 4b, 4c) verbundenen Aufnahmeelementen (8), wobei der Mastschaft (2) in einer in vertikaler Richtung ausgerichteten Achse (5) angeordnet ist und die Traversen (4a, 4b, 4c) in jeweils voneinander abweichenden horizontalen Richtungen ausgerichtet, vom Mastschaft (2) abragend angeordnet sind, wobei Traversen (4a, 4b, 4c) derart um einen Azimutalwinkel zur horizontalen Leiterseilrichtung (7) verschwenkt angeordnet sind, dass jeweils eine vertikal ausgerichtete, durch einen Aufhängungspunkt des Aufnahmeelements (8) an der Traverse (4a, 4b, 4c) verlaufende Gerade beabstandet zu den von der Traverse (4a, 4b, 4c) der Anordnung des jeweiligen Aufnahmeelements (8) abweichenden Traversen (4a, 4b, 4c) angeordnet ist.

2. Vorrichtung (1) nach Anspruch 1, **dadurch gekennzeichnet, dass** die Traversen (4a, 4b, 4c) jeweils paarweise angeordnet sind.

3. Vorrichtung (1) nach Anspruch 2, **dadurch gekennzeichnet, dass** die paarweise angeordneten Traversen (4a, 4b, 4c) jeweils in einer gemeinsamen Traversenebene (3a, 3b, 3c) angeordnet sind.

4. Vorrichtung (1) nach einem der Ansprüche 1 bis 3, **dadurch gekennzeichnet, dass** mindestens zwei Traversenebenen (3a, 3b, 3c) ausgebildet sind.

5. Vorrichtung (1) nach Anspruch 4, **dadurch gekennzeichnet, dass** drei Traversenebenen (3a, 3b, 3c) oder vier Traversenebenen (3a, 3b, 3c) ausgebildet sind.

6. Vorrichtung (1) nach einem der Ansprüche 3 bis 5, **dadurch gekennzeichnet, dass** die Traversen (3a) einer ersten, oberen Traversenebene (4a) jeweils in einem Winkel (β) im Bereich größer als 90° und kleiner als 180° zur horizontalen Leiterseilrichtung (7) angeordnet sind.

7. Vorrichtung (1) nach Anspruch 6, **dadurch gekennzeichnet, dass** die Traversen (3a) der ersten, oberen Traversenebene (4a) jeweils in einem Winkel (β) im Bereich von 120° bis 150°, insbesondere in einem Winkel (β) von 135°, zur horizontalen Leiterseilrichtung (7) angeordnet sind.

8. Vorrichtung (1) nach einem der Ansprüche 3 bis 7, **dadurch gekennzeichnet, dass** die Traversen (3b) einer zweiten, mittleren Traversenebene (4b) jeweils in einem Winkel (α) von 90° zur horizontalen Leiterseilrichtung (7), gemeinsam einen Winkel von 180° einschließend angeordnet sind.

9. Vorrichtung (1) nach einem der Ansprüche 3 bis 8, **dadurch gekennzeichnet, dass** die Traversen (3c) einer dritten, unteren Traversenebene (4c) jeweils in einem Winkel (γ) im Bereich größer als 0° und kleiner als 90° zur horizontalen Leiterseilrichtung (7) angeordnet sind.

10. Vorrichtung (1) nach Anspruch 9, **dadurch gekennzeichnet, dass** die Traversen (3c) der dritten, unteren Traversenebene (4c) jeweils in einem Winkel (γ) im Bereich von 30° bis 60°, insbesondere in einem Winkel (γ) von 45°, zur horizontalen Leiterseilrichtung (7) angeordnet sind.

11. Vorrichtung (1) nach einem der Ansprüche 1 bis 10, **dadurch gekennzeichnet, dass** die Vorrichtung (1) symmetrisch zu einer Ebene ausgebildet ist, welche durch die Achse (5) des Mastschaftes (2) und die Leiterseilrichtung (7) aufgespannt ist.

12. Vorrichtung (1) nach einem der Ansprüche 1 bis 11, **dadurch gekennzeichnet, dass** jede Traverse (4a, 4b, 4c) mindestens ein Aufnahmelement (8) aufweist.

13. Vorrichtung (1) nach einem der Ansprüche 1 bis 12, **dadurch gekennzeichnet, dass** die Aufnahmeelemente (8) einer Traversenebene (3a, 3b, 3c) in einer gemeinsamen horizontalen Ebene angeordnet sind.

14. Vorrichtung (1) nach einem der Ansprüche 1 bis 13, **dadurch gekennzeichnet, dass** die Aufnahmeelemente (8) als Isolatoren zwischen einer Traverse (4a, 4b, 4c) und einem Leiterseil (6) ausgebildet sind.
